# EUROPEAN PATENT APPLICATION

(11) **EP 1 816 842 A1**
(43) Date of publication of application: **08.08.2007**
(21) Application number: 06022523.2
(22) Date of filing: 27.10.2006
(51) Int. Cl.: H04M 7/12, H04N 7/173, H04L 12/66

(54) **Digital cable network telephone service provider supporting local wireless networks**

(30) Priority: 07.02.2006 US 348962; 07.02.2006 US 348814; 07.02.2006 US 348743; 22.03.2006 US 386586; 04.05.2006 US 418020
(71) Applicant: Broadcom Corporation, Irvine, CA 92617 (US)
(72) Inventor: Bennett, James D., San Clemente, CA 92672 (US)
(74) Representative: Jehle, Volker Armin

(57) **Abstract**

A communication infrastructure includes a plurality of cable modem circuits communicatively coupled to a cable network and each associated with a corresponding one of a plurality of subscribers. A head end system communicatively couples to the cable network, to the public switched telephony network, and to the Internet network and bridges calls between the Internet network and the public switched telephony network, between the cable network and the Internet network, and between the cable network and the public switched telephony network. A billing server of the head end system grants call bridging permission to telephone devices and monitors bridging usage. The cable modem circuits include wireless access points. The head end system routes a call to a wireless terminal via the cable network and a wireless access point within a home when present there and via a wireless access point coupled to the Internet network when not present there.

## Description

### CROSS REFERENCES TO RELATED APPLICATIONS

This application is a continuation-in-part of the following co-pending applications:
1. Utility Application Serial No. 11/348,962, filed on February 7, 2006, and entitled "TELEPHONE SUPPORTING BRIDGING BETWEEN A PACKET SWITCHED NETWORK AND THE PUBLIC SWITCHED TELEPHONE NETWORK";
2. Utility Application Serial No. 11/348,814, filed on February 7, 2006, and entitled "COMPUTING DEVICE SUPPORTING BRIDGING BETWEEN A PACKET SWITCHED NETWORK AND THE PUBLIC SWITCHED TELEPHONE NETWORK";
3. Utility Application Serial No. 11/348,743, filed on February 7, 2006, and entitled "SET TOP BOX SUPPORTING BRIDGING BETWEEN A PACKET SWITCHED NETWORK AND THE PUBLIC SWITCHED TELEPHONE NETWORK"; and
4. Utility Application Serial No. 11/386,586, filed on March 22, 2006, and entitled "SERVICE EXCHANGE IN A VOIP TO TELEPHONY BRIDGING NETWORK", all of which are incorporated herein in their entirety for all purposes.

### BACKGROUND OF THE INVENTION

### 1. TECHNICAL FIELD OF THE INVENTION

This invention relates generally to communication systems and more particularly to Voice over Internet Protocol (VoIP) telephony and to Public Switched Telephone Network (PSTN) telephony.

### 2. DESCRIPTION OF RELATED ART

Voice telephony has been known for many years. Initially, dedicated conductors between telephones supported voice telephony. Then, operators manually switching connectors to create and tear down circuits between telephones enabled voice telephony. As technology advanced, mechanical components performed the switching operations to create and tear down circuits between telephones. With advancing technology, computers and semiconductor components replaced the mechanical components to perform circuit-switching duties. Networks created using this circuit-switched technology are generally known as the Public Switched Telephone Network (PSTN). Generally, the PSTN provides a circuit-switched, time-divided connection between telephones.

Packet data communications, such as those supported by the Internet, differ from circuit-switched communications. With packet data communications, a source device forms a data packet, transmits the data packet to a packet data network, and based upon a destination address, e.g., Internet Protocol (IP) address of the data packet, the packet data network passes the data packet to a destination device. As the Internet and other packet data networks grew in popularity, packet switched voice telephony was developed. One common type of packet switched voice telephony is Voice over Internet Protocol (VoIP) telephony. When VoIP telephony was first introduced, the data packet transmission latency of the Internet and of other servicing networks caused the quality of VoIP telephony to be significantly worse than that of PSTN telephony. Over time, packet data transmission latency of the Internet and of other servicing packet data networks has decreased. Now, VoIP telephony provides service quality equal to or better than VoIP telephony in many cases.

Recently developed VoIP telephony applications enable computer users to establish non-toll VoIP telephone calls across the Internet. Compared to PSTN telephony VoIP telephony of this type is significantly less expensive, particularly for overseas calls. However, only a limited number of people have a computer upon which this VoIP telephony application may be loaded and have Internet access of a quality that will support the VoIP telephony application.

In order to gain some advantages of VoIP telephony but still service consumers having PSTN telephones, VoIP telephony service providers typically deploy VoIP gateways. The VoIP gateways bridge communications between the PSTN (PSTN telephony call) and the Internet (VoIP telephony call). VoIP telephony service providers typically extract a toll for servicing a call via the VoIP gateway bridge, thus destroying in part the low cost attractiveness of VoIP telephony.

Alternatives to traditional telephone network now exist that include wireless local loop and cable modem network telephone service, for example. Cable modem network telephone service systems deploy cable modems at subscriber locations. These cable modems couple to both subscriber telephones and to a cable network. A telephone service provider deploys a head unit that couples to the cable network and to the PSTN. The combination of a cable modem, the cable network, and the head unit intercouple a subscriber's telephone to the PSTN. Due to aggregation efficiencies, the cable modem network service provider can typically provide attractive rates to the subscribers, as compared to a telephone company. However, difficulties exist with such systems due to the non-local PSTN access of telephones, e.g., 911 call servicing, that make these systems unattractive from other standpoints. Thus, a need exists for systems and methods of operations that overcome the shortcomings of these prior telephony systems.

### BRIEF SUMMARY OF THE INVENTION

The present invention is directed to apparatus and methods of operation that are further described in the following Brief Description of the Drawings, the Detailed Description of the Drawings, and the Claims.

According to an aspect of the invention, a communication infrastructure is provided comprising:
a public switched telephony network;
an Internet network;
a cable network;
a head end system communicatively coupled to the public switched telephony network, to the cable network, and to the Internet network;
the head end system operable to bridge calls between the public switched telephony network and the Internet network; and
a telephone device of a subscriber having a telephone number associated with both the head end system and the public switched telephony network, wherein the telephone device interacts with a billing server of the head end system to obtain authorization for head end system bridging between the Internet network and the public switched telephony network for the telephony device.

Advantageously, the head end system is further operable to bridge calls between the cable network and the Internet network and to bridge calls between the public switched telephone network and the cable network.

Advantageously, the billing server of the cable head end is further operable to monitor bridging use of the head end system by the telephone device.

Advantageously, the communication infrastructure further comprises a plurality of cable modem circuits, each servicing at least one subscriber and including:
a cable network interface;
at least one POTS interface; and
bridging circuitry operable to bridge a call between a VoIP format and a POTS format.

Advantageously, each of the plurality of cable modem circuits has associated therewith at least one public switched telephony network number and at least one IP address.

Advantageously, the communication infrastructure further comprises a plurality of cable modem circuits, each including:
a cable network interface;
at least one POTS interface;
a wireless local area network interface, and
bridging circuitry operable to bridge a call between a VoIP format and a POTS format.

Advantageously, the head end system is further operable to track a plurality of subscribers.

Advantageously, the head end system is further operable to forward an incoming public switched telephony network call to a remote VoIP terminal via the Internet network.

Advantageously, the head end system is further operable to:
alert a POTS telephone associated with a subscriber and serviced by a cable modem circuit;
wait for pickup by the POTS telephone;
when the POTS telephone picks up, terminate an incoming call to the POTS telephone; and
when the POTS telephone does not pickup, forward the incoming call to a remote VoIP terminal associated with the subscriber.

According to an aspect of the invention, a communication infrastructure comprises:
a public switched telephony network;
an Internet network;
a cable network;
a head end system communicatively coupled to the public switched telephony network, to the cable network and to the Internet network; and
the head end system operable to bridge calls between the public switched telephony network and the Internet network, between the cable network and the Internet network, and between the cable network and the public switched telephony network.

Advantageously, the communication infrastructure further comprises a plurality of cable modem circuits, each servicing at least one subscriber and including:
a cable network interface;
at least one POTS interface; and
bridging circuitry operable to bridge a call between a VoIP format and a POTS format.

Advantageously, each of the plurality of cable modem circuits has associated therewith at least one public switched telephony network number and at least one IP address.

Advantageously, the communication infrastructure further comprises a plurality of cable modem circuits, each including:
a cable network interface;
at least one POTS interface;
a wireless local area network interface, and
bridging circuitry operable to bridge a call between a VoIP format and a POTS format.

Advantageously, the head end system is further operable to track a plurality of subscribers.

Advantageously, the head end system is further operable to forward an incoming public switched telephony network call to a remote VoIP terminal via the Internet network.

Advantageously, the head end system is further operable to:
alert a POTS telephone associated with a subscriber and serviced by a cable modem circuit;
wait for pickup by the POTS telephone;
when the POTS telephone picks up, terminate an incoming call to the POTS telephone; and
when the POTS telephone does not pickup, forward the incoming call to a remote VoIP terminal associated with the subscriber.

According to an aspect of the invention, a communication infrastructure is provided that extends into a home, the communication infrastructure comprising:
a public switched telephony network;
an Internet network;
a head end system communicatively coupled to both the public switched telephony network and to the Internet network;
a cable network communicatively coupled to the head end system and that extends into the home;
a first wireless access point communicatively coupled to the Internet network outside of the home;
a second wireless access point communicatively coupled to the cable network within the home;
a mobile terminal having a wireless transceiver that communicatively couples with the first wireless access point when the mobile terminal is outside the home, and communicatively couples with the second wireless access point when the mobile terminal is inside the home;
the mobile terminal having a telephone number associated with the public switched telephony network; and
the head end system supporting address mapping that enables communication to the mobile terminal using the telephone number via both of the first wireless access point and the second wireless access point.

Advantageously, the head end system is operable to bridge calls between the public switched telephony network and the Internet network; and

Advantageously, the head end system is further operable to bridge calls between the cable network and the Internet network.

Advantageously, the communication infrastructure further comprises a plurality of cable modem circuits, each including:
a cable network interface;
at least one POTS interface;
a wireless local area network interface, and
bridging circuitry operable to bridge a call between a VoIP format and a POTS format.

Advantageously, the each of the plurality of cable modem circuits has associated therewith at least one public switched telephony network number and at least one IP address.

Advantageously, the head end system is further operable to track a plurality of subscribers.

Advantageously, the head end system is further operable to forward an incoming public switched telephony network call to a remote VoIP terminal via the Internet network.

Advantageously, the head end system is further operable to:
alert a POTS telephone associated with a subscriber and serviced by a cable modem circuit;
wait for pickup by the POTS telephone;
when the POTS telephone picks up, terminate an incoming call to the POTS telephone; and
when the POTS telephone does not pickup, forward the incoming call to a remote VoIP terminal associated with the subscriber.

According to an aspect of the invention, a method is provided for operating a communication infrastructure that includes a cable network, a head end system that communicatively couples to the cable network, to the Internet, and to the public switched telephone network, and a plurality of cable modem circuits that communicatively couple to the cable network, the method comprising:
the head end system receiving a call bridging request from a telephone device of a subscriber having a telephone number associated with both the head end system and the public switched telephony network;
the head end system interacting with the telephone device to verify authorization of the telephone device to bridge a call between the Internet network and the public switched telephony network network; and
the head end system bridging a call between the Internet network and the public switched telephony network for the telephone device.

Advantageously, the method further comprises the head end system bridging calls between the cable network and the Internet network.

Advantageously, the method further comprises the head end system monitoring bridging use of the head end system by the telephone device.

According to an aspect of the invention, a method is provided for operating a communication infrastructure that includes a cable network, a head end system that communicatively couples to the cable network, to the Internet, and to the public switched telephone network, and a plurality of cable modem circuits that communicatively couple to the cable network, the method comprising:
the head end system bridging a first call between the public switched telephony network and the Internet network;
the head end system bridging a second call between the cable network and the Internet network; and
the head end system bridging a third call between the cable network and the public switched telephony network.

Advantageously, the method further comprises tracking a plurality of subscribers.

Advantageously, the method further comprises the head end system forwarding an incoming public switched telephony network call to a remote VoIP terminal via the Internet network.

According to an aspect of the invention, a method is provided for operating a communication infrastructure that includes a cable network, a head end system that communicatively couples to the cable network, to the Internet, and to the public switched telephone network, a first wireless access point communicatively coupled to the Internet network outside of a home, and a second wireless access point communicatively coupled to the cable network within the home, the method comprising:
the head end system delivering a call to a mobile terminal via the first wireless access point when the mobile terminal is outside the home;
the head end system delivering the call to the second wireless access point when the mobile terminal is inside the home; and
the head end system supporting address mapping that enables communication to the mobile terminal using as single telephone number via both of the first wireless access point and the second wireless access point.

Other features and advantages of the present invention will become apparent from the following detailed description of the invention made with reference to the accompanying drawings.

### BRIEF DESCRIPTION OF THE SERVERAL VIEWS OF THE DRAWINGS

FIG. 1 is a system diagram illustrating a communication infrastructure constructed according to an embodiment of the present invention;
FIG. 2 is a system diagram illustrating a communication infrastructure constructed according to another embodiment of the present invention;
FIG. 3 is a block diagram illustrating a head end system constructed according to an embodiment of the present invention;
FIG. 4 is a block diagram illustrating a cable modem circuit and an interface circuit constructed according to an embodiment of the present invention;
FIG. 5 is a block diagram illustrating a cable modem and POTS interface circuit constructed according to an embodiment of the present invention;
FIG. 6 is a flow chart illustrating operation of a head end system according to an embodiment of the present invention;
FIG. 7 is a block diagram illustrating subscriber tracking and identification information employed according to an embodiment of the present invention; and
FIG. 8 is a flow chart illustrating cable modem circuit operations according to an embodiment of the present invention.

### DETAILED DESCRIPTION OF THE INVENTION

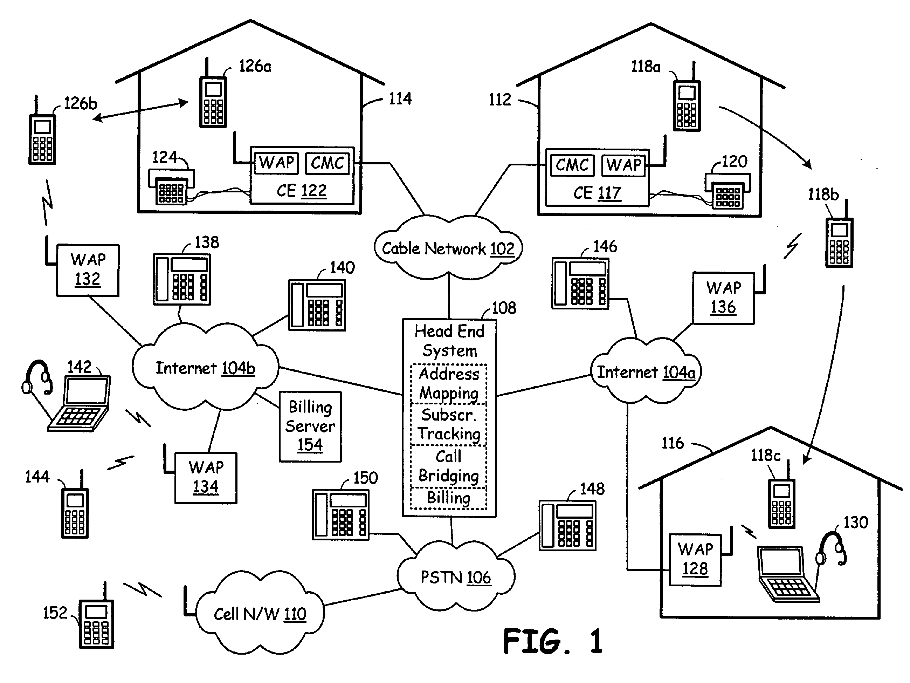

FIG. 1 is a system diagram illustrating a communication infrastructure constructed according to an embodiment of the present invention. The communication infrastructure includes the Public Switched Telephony Network (PSTN) 106, an Internet network (referenced herein as Internet 104a and Internet 104b), a cable network 102, and a head end system 108 communicatively coupled to the PSTN 106, the cable network 102, and the Internet network 104a and 104b. The communication infrastructure services a plurality of terminals, some of which are associated with subscribers to the communication infrastructure. Generally, the head end system 108 associates subscribers with cable equipment that locates within respective premises. Each premises may have associated one or more than one subscriber. Each subscriber may be associated with a single premises or multiple premises. Still further, some subscribers may not directly associate with any particular premises but be serviced by the head end system 108 for call bridging, subscriber tracking, and other operations.

A first premises 112 includes cable equipment 117, a Plain Old Telephone System (POTS) telephone 120, and wireless voice over Internet protocol (VoIP) terminal 118. The VoIP terminal 118 is associated with a subscriber, as is POTS telephone 120. VoIP terminal is referenced at position 118a within premises 112 and will be referenced later at positions 118b, and 118c, which reside outside of premises 112. The cable equipment 117 communicatively couples to cable network 102 and is serviced by head end system 108. Cable equipment 117 includes a cable modem circuit (CMC) operable to communicatively couple to head end system 108 via cable network 102. Cable equipment 117 also includes a Wireless Access Point (WAP) that services a wireless local area network (WLAN) within premises 112. Cable equipment 117 also includes a POTS interface that interfaces the cable equipment 117 to POTS telephone 120. In the embodiment illustrated, the WAP of the cable equipment 117 provides wireless packet data service for VoIP terminal 118 at position 118a. The WAP, and other WAPs described herein, support communications according to a WLAN interface standard, e.g., one or more of the IEEE 802.x standards, the Bluetooth standard, and/or other interface standards, including WiMAX standards, for example.

Likewise, premises 114 includes cable equipment 122. Cable equipment 122 includes cable modem circuitry operable to communicatively couple the cable equipment 122 to head end system 108 via the cable network 102. Cable equipment 122 further includes a WAP that provides wireless service within premises 114 for wireless terminal 126 (referenced at position 126a). The cable equipment 122 also includes a communication interface that services POTS telephone 124. The head end system 108, the cable equipment 117, and the cable equipment 122 may communicate according to a cable communication standard such as the Data Over Cable System Interface Specification (DOCSIS) or variants thereof. Further, the components of the cable network may operate according to another standard or a proprietary format as well. The cable network 102 includes coaxial cabling, fiber cabling, and/or other cabling that may support the cable network communications between head end system 108 and cable equipment 117 and 122.

Premises 116 is serviced directly by Internet 104a. Premises 116 includes a WAP 128 that wirelessly services laptop computer 130 while within premises 116. A cellular network 110 couples to PSTN 106 and supports cellular communications with cellular telephone 152. Cellular network 110 may operate according to a cellular operating standards such as any of the global standards from a billing (GMS) operating standard, any of the North American standards, or any other operating standards. PSTN telephones 148 and 150 couple to PSTN 106. VoIP terminals 146, 140, 138 couple to the Internet 104a and 104b. WAP 136 couples to Internet 140a while WAP 132 couples to Internet 104b. WAP 134 also couples to Internet 140b and provides hot spot communications for VoIP terminals 142 and 144. Note that VoIP terminal 142 is a laptop computer. Billing server 154 couples to Internet 104b and communicates with head end system 108 via Internet 104b.

Head end system 108 includes address mapping functionality, subscriber tracking functionality, call bridging functionality, and billing functionality. According to the present invention, the head end system 108 is operable to bridge calls between the PSTN 106 and the Internet 104a or 104b, between the cable network 102 and the Internet 104a or 104b, and between the cable network 102 and the public switched telephony network 106. Such call bridging may operate to bridge calls between any of the cable network 102, Internet 104a or 104b, the PSTN, and the cellular network 110 (via PSTN 106).

Further, according to the present invention, a telephone device of a cable subscriber, e.g., subscriber corresponding to premises 112 has a telephone number that is associated with both the cable head end 108 and the PSTN 106. In one operation, the telephone device of the cable subscriber interacts with a billing server component of the head end system 108 or a billing server 154 associated with head end system 108 to obtain authorization to use the head end system 108 to bridge a call between the Internet network 104a or 104b and the PSTN 106. For example, VoIP terminal 144 may correspond to a subscriber of premises 112. VoIP terminal 144 couples to the Internet 104b via WAP 134. A subscriber using VoIP terminal 144 desires to communicate with PSTN terminal 148. According to the present invention, the subscriber using VoIP terminal 144 communicates with either head end system 108 or billing server 154 via WAP 134 and Internet 104b to request call bridging by head end system 108. The billing server 154 or billing component of head end system 108 determines, based upon a subscriber profile for example, whether the subscriber has the right to use head end system 108 for call bridging between Internet 104b and PSTN 106 to terminate a call to PSTN terminal 148. Should the billing server component of the head end system 108 (or billing server 154) determine that the subscriber using VoIP terminal 144 has call bridging permission, the head end system 108 sets up and bridges a call between the Internet 104b and the PSTN 106 so that the call may be completed to PSTN terminal 148. Further, billing server 154 or the billing server components of head end system 108 may track bridging usage by the subscriber for later billing.

According to another aspect to the present invention, the WAP associated with cable equipment 117 provides wireless packet data service within premises 112 for VoIP terminal 118 (at position 118a). The head end system 108 supports the cable equipment 117 and provides address mapping that enables communications to the VoIP terminal 118 using a telephone number that is associated with the PSTN 106. The VoIP terminal 118 has a unique Internet Protocol (IP address) that allows calls to be directed to it while operating within premises 112 and being serviced by the WAP of cable equipment 117. An incoming call from PSTN 106 is routed to the head end system 108 based upon a telephone number associated with the VoIP terminal 118 (or POTS telephone 120). In response to the receipt of this incoming call having the telephone number, the head end system 108 performs address mapping to correlate the incoming PSTN number to the IP address of VoIP terminal 118. Such address mapping enables delivery of the call to the VoIP terminal 118 when serviced by WAP of cable equipment 117.

The VoIP terminal 118 may roam from position 118a to position 118b and receive wireless service from WAP 136 at position 118b. Upon attaching to WAP 136, the VoIP terminal 118 reports its attachment to the head end system 108. Subscriber tracking and address mapping functionality of head end system 108 determines that the subscriber terminal 118 is no longer at location 118a within premises 112 but is now served by WAP 136 at location 118b and stores this information in its address mapping storage. Then, when a call is incoming via PSTN 106 directed to a PSTN telephone number associated with the VoIP terminal 118, the address mapping functionality of head end system 108 bridges the incoming PSTN call via Internet 104a for termination to VoIP terminal 118 via WAP 136 at position 118b. Thus, the call may be delivered to the VoIP terminal 118 at its location 118when associated with WAP 136. Likewise, when the VoIP terminal 118 roams to location 118c within premises 116, the VoIP terminal 118c associates with WAP 128. This registration operation is communicated to head end system 108, which updates its address mapping and subscribing tracking data to show that VoIP terminal 118 is now associated with WAP 128 (position 118c). Based upon its address mapping and subscriber tracking operation, the head end system 108 routes an incoming PSTN call directed to a PSTN number associated with VoIP terminal 118 via the Internet 104a and WAP 128 to VoIP terminal 118 at position 118c. Such routing requires bridging of the call between the PSTN 106 and the Internet 104a.

The operations of the present invention as described with reference to FIG. 1 apply to any roaming Internet terminal such as Internet terminals 126, 130, 142, 144, 126, or another terminal. As another example of operation according to the present invention, a subscriber using VoIP terminal 126 within premises 114 at position 126a receives wireless service via WAP of cable equipment 122. Incoming communications received via PSTN 106 or Internet 104a or 104b by head end system 108 that are intended for VoIP terminal 126, based upon address mapping and subscriber tracking information, are delivered to the VoIP terminal 126 via cable network 102 and cable equipment 122 at position 126a. Likewise, if the subscriber using VoIP terminal 126 desires to establish a telephone call to cell telephone 152, for example, the subscriber using VoIP terminal 126 establishes communication via the WAP of cable equipment 122 with the head end system 108. The head end system 108 receives the request from VoIP terminal 126 and determines whether the subscriber has the right to terminate the call to cell telephone 152. If the VoIP terminal 126 does have permission, the head end system 108 sets up and services the call with cellular telephone 152.

Further, according to the present invention, the head end system 108 bridges calls between the cable network 102 and the Internet 104a and 104b. Thus, if the subscriber using POTS telephone 124 desires to establish a call to VoIP terminal 142, the head end system 108 sets up the VoIP call to VoIP terminal 142 via Internet 104b with POTS telephone 124. The outgoing call from POTS telephone 124 may use a PSTN number associated with a subscriber of VoIP terminal 142. Thus, based upon its address mapping and subscriber tracking information, the head end system 108 resolves the PSTN number to VoIP terminal 144, for example, and sets up and services the call to VoIP terminal 144.

According to another operation of the present invention, a subscriber VoIP terminal 126 that was previously serviced by WAP 132 at position 126b enters the service area of WAP of cable equipment 122 within premises 114 at position 126a. When the subscriber terminal moves to position 126a, it sends a location update to head end system 108 and head end system 108 updates its address mapping and subscriber tracking information so that incoming PSTN calls or incoming VoIP calls intended for the subscriber using VoIP terminal 126 are be delivered to the VoIP terminal 126 at position 126a as serviced by the WAP of cable equipment 102.

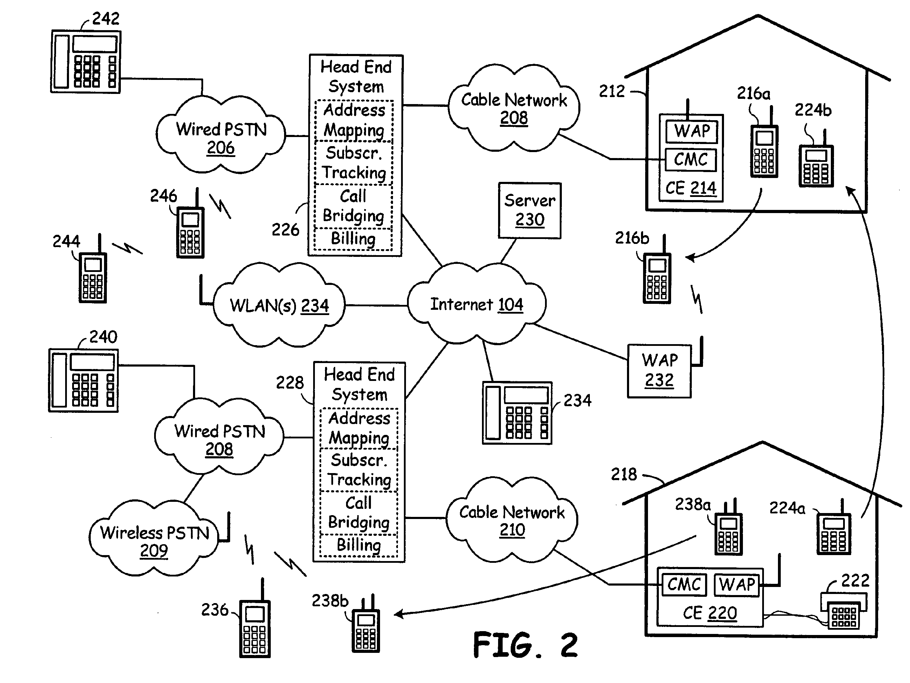

FIG. 2 is a system diagram illustrating a communication infrastructure constructed according to another embodiment of the present invention. The communication infrastructure includes cable networks 208 and 210, Internet 104, wireless LAN 234, wired PSTN 206 and 208, and wireless PSTN 209. The wireless PSTN 209 may be a cellular network or another wireless network coupled to wired PSTN 208 that services terminals 236 and 238 (at position 238b). Cable network 208 communicatively couples to cable equipment 214 that locates within premises 212. Cable equipment 214 includes a WAP and cable modem circuit. Cable modem circuit supports communication with head end system 226 via cable network 208 according to the DOCSIS operating standard, for example. The cable modem circuit of premises 212 has a cable network address and may also have associated therewith an IP address and/or a PSTN telephone number. The WAP of cable equipment 214 services wireless terminals 216 and 224, at positions 216a and 224a within premises 212, respectively.

Premises 218 includes cable equipment 220 having cable modem circuit and WAP. The cable modem circuit of cable equipment 220 communicatively couples to head end system 228 via cable network 210. The WAP of cable equipment 220 services VoIP terminals 238 and 224 at positions 238a and 224a, respectively. The cable equipment 220 also services POTS telephone 222 via a twisted pair connection, for example.

According to a first operation of the communication infrastructure of FIG. 2, a PSTN telephone call originating from PSTN telephone 242 is received by head end system 226 via wired PSTN 206. A destination PSTN telephone number of the incoming call is associated with cable equipment 214, with a subscriber, and/or with the head end system 226. Address mapping and subscriber tracking functionality of the head end system and/or server 230 enables the head end system 226 to determine a delivery location based upon the PSTN telephone number. For example, the head end system may map the incoming PSTN phone to cable equipment 214 and attempt delivery of the call to VoIP terminal 216 at position 216a. However, VoIP terminal 216 may have roamed outside of premises 212 and attached at position 216b to WAP 232. Upon attachment to WAP 232, the VoIP terminal position 216 (position 216b) registers within head end system 226. Based upon this registration, the head end system 226 updates its address mapping and subscriber tracking information. Subsequently, when the incoming PSTN call is received from PSTN terminal 242, the head end system 226 resolves the PSTN number to VoIP terminal 216 at location 216b where it is serviced by WAP 232. Then, the head end system 226 determines whether PSTN to Internet call bridging is supported for the subscriber to VoIP terminal 216 (position 216b). If call bridging is supported for the subscriber to VoIP terminal 216 (position 216b), the head end system 226 enables call bridging between the wired PSTN 206 and the Internet 104. With call bridging enabled, the head end system 226 sets up and services the call from PSTN terminal 242 to VoIP terminal 216 (location 216b) via WAP 232 until completion.

According to another operation of the present invention, a user of VoIP terminal 246 desires to establish a call to POTS telephone 222 of premises 218. The VoIP terminal 246 establishes communications via wireless LAN 234 and Internet 104 with head end system 228. Head end system 228 resolves a destination PSTN number received with the call setup request provided by VoIP terminal 246 to communication equipment 220. Based upon this resolution, the head end system 226 determines whether the subscriber of communication equipment 220 supports call bridging between the Internet 104 and cable network 210. When such bridging is supported, the head end system 228 sets up and services the call between VoIP terminal 246 and POTS telephone 222 via wireless LAN 234, Internet 104, cable network 210, and cable equipment 220.

According to another operation of the present invention, dual mode terminal 238 is associated with subscriber of premises 218. Initially, the dual mode terminal 238 (at position 238a) attaches to the WAP of cable equipment 220. When registered with the WAP of cable equipment 220, dual mode terminal 238 (at position 238a) is operable to receive telephone calls corresponding to a PSTN number associated with cable equipment 220. Thus, for example, an incoming PSTN call from PSTN terminal 240, based upon PSTN number associated with subscriber premises 218, is delivered to dual mode terminal 238 (at position 238a) when serviced by WAP of cable equipment 220.

According to the present invention, dual mode terminal 238 previously serviced by WAP communication of cable equipment 220 (at position 238a) roams to position 238b and registers with wireless PSTN 209. Based upon this registration, the wireless terminal 238 reports its new location to the head end system 228 (or server 230). Based upon this information, the head end system 228 updates its address mapping and subscriber tracking information to show that dual mode terminal 238 is currently serviced by wireless PSTN 209 (at position 238b). Then, based upon this association, an incoming call from VoIP terminal 234, for example, is received by head end system 228. This incoming call includes a PSTN number associated with the subscriber of premises 218 and cable equipment 220 contained therein. The head end system 228, based upon the address mapping and subscriber tracking information, determines that the dual mode terminal 238 is active for the subscriber at position 238b. Then, based upon this information, the head end system 228 sets up a call to the dual mode terminal 238 (at position 238b) via the wired PSTN 208 and the wireless PSTN 209. The head end system 228 then services this call by bridging between the Internet 104 and the wired PSTN 208. The complete the communication path for this call between VoIP terminal 234 and dual mode terminal 238b includes the Internet 104, the head end system 228, the wired PSTN 208, and the wireless PSTN 209.

According to another aspect to the present invention, with the dual mode terminal 238 roaming from premises 218 (position 238a) to wireless PSTN 209 (position 238b), the head end system 228 cooperates with the cable network 210, the wired PSTN 208, and the wireless PSTN 209 to handover the call from servicing by WAP of communication equipment 220 to servicing by wireless PSTN 209. Such handover requires interaction with the wireless PSTN 209 to setup a parallel communication path to dual mode terminal 238 prior to handover. Such handover service enables a subscriber using dual mode terminal 238 to continually receive voice service in its communication with VoIP terminal 234 when moving from position 238a to position 238b.

According to still another operation to the present invention, the VoIP terminal 224 at position 224a is initially serviced by cable equipment 220 and the WAP contained therein. The VoIP terminal 224 then roams to position 224b within premises 212 and is serviced by WAP and cable equipment contained therein. An incoming call from cellular telephone 236 is initially terminated to VoIP terminal 224 at position 224a based upon address mapping and subscriber tracking operations of head end system 228 using a PSTN number corresponding to cable equipment 220 and subscriber. At first, this call is bridged by the head end system 228 between the wired PSTN 208 and the cable network 210. Then, the VoIP terminal 224 roams from position 224a within premises 218 to position 224b within premises 212. If there is overlap in service coverage area, the telephone call is maintained during roaming between the service coverage area of WAP cable equipment 220 and the service coverage area of WAP of cable equipment 214.

At its new location within premises 212, the VoIP terminal 224 (location 224b) is serviced by the WAP of cable equipment 214. This service coverage area is outside of the service coverage area of WAP of cable equipment 220. Thus, the head end system 228 and the head end system 226 cooperatively operate to direct handover of the ongoing call with cellular terminal 224. Such handover is accomplished by head end system 228 interacting with head end system 226 to determine that the VoIP terminal 224 is roaming to the service area of WAP of cable equipment 214. Address mapping and subscriber tracking locations are updated by head end system 228 to indicate such new association. Based upon a handover criteria, the head end system 228 and head end system 226 cooperate to handover the call previously serviced via wireless PSTN 209, wired PSTN 208, head end system 228, cable network 210, and WAP of cable equipment 220 to a new communication path that includes wireless PSTN 209, wired PSTN 208, head end system 228, Internet 104, head end system 226, cable network 208, and WAP of cable equipment 214. Thus, after handover from the WAP of cable equipment 220 to the WAP of cable equipment 214, a different service path is provided. With this new service path, the head end system 228 no longer bridges between wired PSTN 208 and cable network 210. Instead, the head end system 228 bridges between wired PSTN 208 and the Internet 104. Further, with this new communication path, the head end system 226 bridges between Internet 104 and cable network 208 for servicing of VoIP terminal 224 at position 224b.

As is also shown in FIG. 2, VoIP terminal 216 may roam from position 216a where it is serviced by WAP of cable equipment 214 to position 216b where it is serviced by WAP 232. According to the present invention, the head end system 226 initially services a communication between VoIP terminal 244 and VoIP terminal 216 (position 216a). In setting up and servicing this call, the head end system 226 bridges communication between the Internet 104 and the cable network 206. The complete communication path servicing this call includes wireless LAN 234, Internet 104, head end system 226, cable network 208, and WAP of cable equipment 214. With the VoIP terminal 216 roaming from position 216a to 216b, the address mapping and subscriber tracking database of the head end system 226 facilitates handover of the call to a new communication path. This new communication path includes WLAN 234, Internet 104, head end system 226, Internet 104, and WAP 232. With the new path, the head end system 226 remains in the routing path even though the routing path could be supported simply by wireless LAN 234, Internet 104, and WAP 232. In an alternate operation, upon new the attachment of VoIP terminal 216 at position 216b to WAP 232, the head end system 226 simply directs the VoIP terminal 244 to send packets directly to VoIP terminal 216 at position 216b via WAP 232.

According to another operation of the embodiment of FIG. 2, a call from PSTN terminal 240 intended for POTS telephone 222 (associated with a subscriber) is routed via PSTN 208, head end system 228, cable network 210, and cable modem circuit 220. The head end system 228 first alerts the POTS telephone 222 that a call is incoming. Then, head end system 228 waits for pickup by the POTS telephone 222. If the subscriber picks up the POTS telephone 222, the head end system 228 terminates the incoming call to the POTS telephone 222. However, when the POTS telephone 222 does not pickup, the head end system 228 forwards the incoming call from PSTN terminal 240 via PSTN 208 to a remote VoIP terminal 236 associated with the subscriber. Of course, different variations of these operations may occur based upon subscriber input. For example, the subscriber may direct head end system 228 to deliver all incoming communications to voice mail serviced by server 230, for example. Further, the subscriber may direct that his or her POTS telephone 222 be first alerted, the incoming call next be attempted to be terminated to VoIP terminal 236, then to a wireless PSTN terminal 238, and finally to voice mail. Such operations are all supported by head end systems 226 and 228.

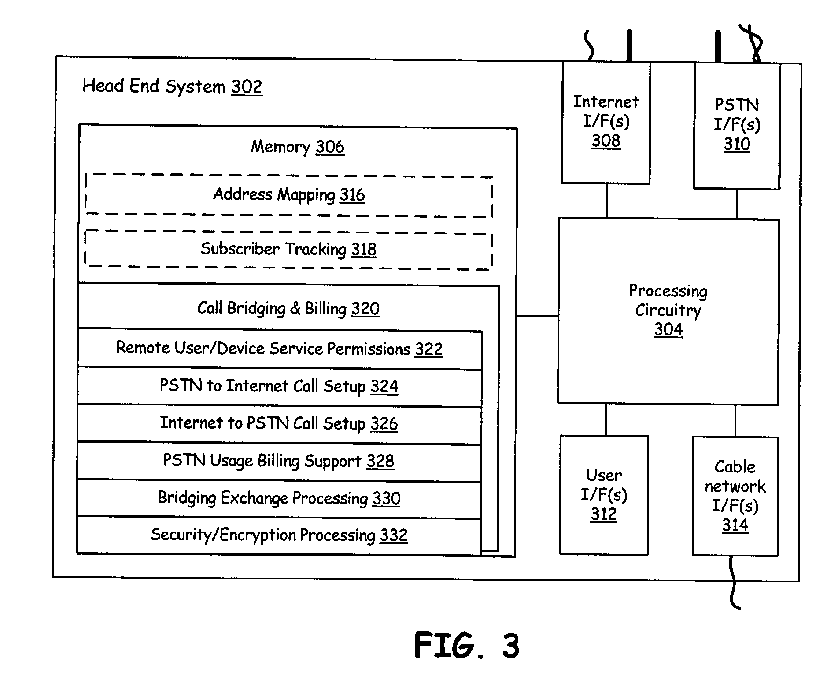

FIG. 3 is a block diagram illustrating a head end system constructed according to an embodiment of the present invention. The head end system 302 may be any of head end system 108, head end system 226, or head end system 228 of FIGs. 1 or 2. The head end system 302 may include additional functionality relating to the operations previously described with reference to FIGs. 1 and 2 even though such functionality is not explicitly described with reference to FIG. 3. Head end system 302 includes processing circuitry 304, memory 306, Internet interface(s) 308, PSTN interface(s) 310, cable network interface(s) 314, and user interface(s) 312. Processing circuitry 304 is one or more of a standard instruction set microprocessor, a reduced instruction set microprocessor, a digital signal processor, an application specific integrated circuit, a field programmable gate array, and any other processing circuit operable to execute instructions and process data.

Memory 306 is one or more of read-only memory, random access memory, a hard disk drive, tape drive, flash RAM, flash ROM, and any other type of memory capable of storing instructions and data. Internet interface(s) 308 interfaces the head end system 302 to the Internet 104. According to the present invention, head end system 302 executes operations to support the communication functions previously described with reference to FIGs. 1 and 2. Stored in memory 306 are software instructions that, when executed by the processing circuitry 304, cause the head end system 302 to perform the operations of the present invention. Upon execution of these software instructions, the processing circuitry 304 creates data that is also stored in memory. Each set of software instructions stored in memory has not only software instruction components but also data components, even though these components are referred to jointly hereinafter.

The Internet interface(s) 308 supports a wired interface and/or a wireless interface to the Internet 104 such as a fiber optic connection, a high speed wireless interface, or another type of interface operable to support packet data support communications between head end system 302 and the Internet 104. PSTN interface 310 is a wired and/or wireless interface that inter couples the head end system 302 to the PSTN 106, e.g., T1 interface, T3 interface, twisted pair interface, and/or a wireless local loop interface. The cable network interface 314 includes one or more of an optical cable interface and/or a coaxial cable interface to a cable network 102, 202, or 204. User interface(s) 312 include keyboard interfaces, monitor interfaces, and/or other user input devices and user display devices.

Address mapping instructions and data 316 support address mapping functionality of the head end system 302 among subscriber identifiers, IP addresses, PSTN numbers, and cable network addresses of POTS telephones, PSTN telephones, and VoIP terminals according to the present invention. For example, each of these telephones 118, 120, 124, 126, 130, and 132 has associated therewith a PSTN telephone number. The address mapping instructions 316, upon execution by the processing circuitry 304, cause the head end system 302 to map PSTN numbers to cable network addresses and/or IP addresses of the infrastructure of the present invention. Further, the address mapping instructions 316, upon execution by the processing circuitry 304, causes the head end system to map subscriber identifiers to PSTN numbers, IP addresses, and/or cable network addresses of corresponding terminals. Finally, the address mapping instructions 316, upon their execution by the processing circuitry 304, causes the head end system 302 to map PSTN numbers, IP addresses, and/or cable network addresses to subscribers to the communication infrastructure of the present invention. Consistent with these mapping operations, an incoming PSTN call received via PSTN interface(s) 310 is mapped to a corresponding IP address or cable network address via the address mapping operations and data 316 based upon a destination PSTN number. Further, consistent with these mapping operations, outgoing calls received via the cable network interface(s) are mapped to a corresponding IP address, cable network address, or PSTN number via the address mapping operations and data 316 based upon a desired destination PSTN number, desired destination subscriber identity, or desired destination IP address or PSTN number, for example. Destination information received via this address mapping is then used for call termination to the corresponding serviced telephone, for example.

The subscriber tracking instructions 318, when executed by the processing circuitry 304, enable the head end system 302 to track subscribers to the communication infrastructure. For example, when a subscriber transitions to being associated with telephone 118, to VoIP terminal 148, to PSTN terminal 134, and then to cellular handset 138 of FIG. 1, the subscriber tracking operations of the head end system 302 keep track of a primary terminal associated with the particular subscriber. Then, incoming communications intended for the particular subscriber are mapped to a currently valid terminal for the subscriber and then delivered by head end system 302 accordingly.

Also stored in memory 306 are call bridging and billing instructions 320. The call bridging and billing software 320 upon execution by processing circuitry 302 enable the head end system 302 to bridge calls between the Internet interface 308 and the PSTN interface 310, between the PSTN interface 310 and the cable network interface 314, and between the Internet interface 308 and the cable network interface 314. The call bridging and billing instructions 320 also support, upon their execution, redirection of incoming packets received via the Internet interface 308 out via the Internet interface 308 to a differing destination IP address. Such operation may occur, or example with reference to FIG. 1, when an incoming VoIP call from VoIP terminal 146 is intended for telephone 118. However, based upon the subscriber tracking 318 operations and address mapping operations, it is determined that a currently valid terminal for the subscriber is VoIP terminal 148. In order to deliver the call to the current valid VoIP terminal 148, the processing circuit redirects incoming packets to the VoIP terminal 148. Likewise, packets sent from VoIP terminal 148 intended for subscriber are redirected to VoIP terminal 146.

Memory 306 also stores remote user/device service permission instructions 322. Upon execution of these instructions 322, the head end system 320 determines whether particular subscribers and their associated terminals have permission to receive calls and/or to place calls from a remote location. For example, a subscriber to the communication infrastructure may send a remote call setup request from a VoIP terminal, requesting bridging to the PSTN. Upon execution of the remote users and devices instructions 322, the head end system 302 determines whether this remote user has permission to use the bridging operations of the head end system 302.

PSTN to Internet call setup instructions 324, upon execution by processing circuitry 304, enable head end system 302 to setup and service a PSTN to Internet call. For example, a remote subscriber may desire to bridge a call from PSTN terminal 134 to VoIP terminal 146 of FIG. 1. Should the subscriber have the right to do so, the subscriber accesses head end system 108 (302) to initiate the PSTN to Internet call. Likewise, Internet to PSTN call setup instructions 326, upon execution by processing circuitry 304, enable the head end system 302 to setup and service an Internet to PSTN call. Such call may occur when VoIP terminal 148 desires to access cellular terminal 138 of FIG. 1. Because the user of VoIP terminal 148 is a subscriber to the system, it can access the head end system 302 (108) to request setup of the Internet to PSTN call.

Also supported by the head end system 302 are PSTN usage billing support instructions 328, bridging exchange processing instructions 330, and security/encryption processing instructions 332. Each subscriber to the system may use the head end system 302 to access the PSTN. The PSTN usage billing support instructions 328, upon execution by processing circuitry 304, cause the head end system 302 to monitor PSTN usage by subscribers and to bill for such PSTN usage. Bridging exchange processing instructions 330, upon their execution by the processing circuitry 304, cause the head end system 302 to interact with another head end system to enable exchange of services. As was previously described with reference to FIG. 2, multiple head end systems 226 and 228 cooperatively bridge calls across the Internet 104 between different PSTN segments 206 and 208. The bridging usage of the head end systems 226 and 228 may be exchanged on a like kind basis. This like kind basis is tracked among a group of head end systems to ensure that no head end system is performing or bridging for other head end system in a manner that is not fair according to prior agreement.

Security/encryption processing instructions 332, upon execution by processing circuitry 304, enable the head end system 302 to secure and/or encrypt communications serviced by the head end system 302. Such security encryption may include a private key public key methodology for encrypting communications between telephones and remote terminals. Such encryption/security processing prevents snooping of communications by unintended terminals.

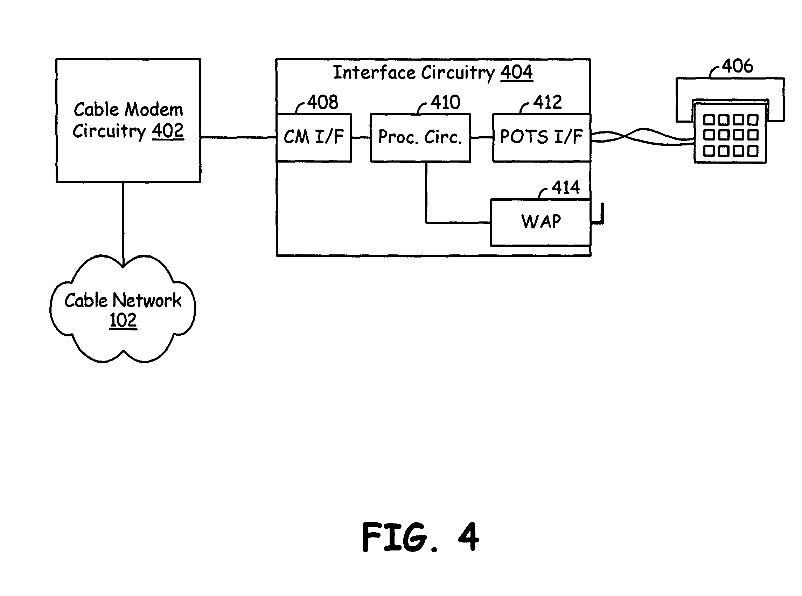

FIG. 4 is a block diagram illustrating a cable modem circuit and an interface circuit constructed according to an embodiment of the present invention. The cable modem circuit 402, the interface circuit 404, and a POTS telephone 406 are shown. The cable modem circuit 402 couples to cable network 102, which couples to a head end system 108. The cable modem circuit 402 also couples to interface circuit 404 via cable modem interface 408. Interface circuit 404 also includes processing circuit and POTS interface circuit 412. The POTS interface circuit 412 couples to POTS telephone 406 via a twisted pair of conductors. The POTS interface circuit 412 implements a POTS interface protocol to POTS telephone 406.
The cable modem interface 408 of the interface circuit 404 interfaces to the cable modem circuit 402. This connection may be according to a wireless LAN or a wired LAN standard. Processing circuit 410 bridges communications between a POTS telephony format (PSTN telephony format) and a format consistent with cable modem circuit 402. The cable modem circuit 402 may interface with the interface circuit 404 via the cable modem interface 408 using a LAN (Ethernet) communication standard. In such case, the processing circuit 410 would convert between the POTS format and an Ethernet format. With this format, the processing circuit 410 may implement a VoIP communication format. The cable modem circuit 402 via the cable network 102 to a head end system 108 may support the DOCSIS communication specification, for example. The interface circuitry 404 further includes a wireless access point 414 that provides wireless coverage for VoIP terminals and other wireless devices supported by interface circuitry 404.

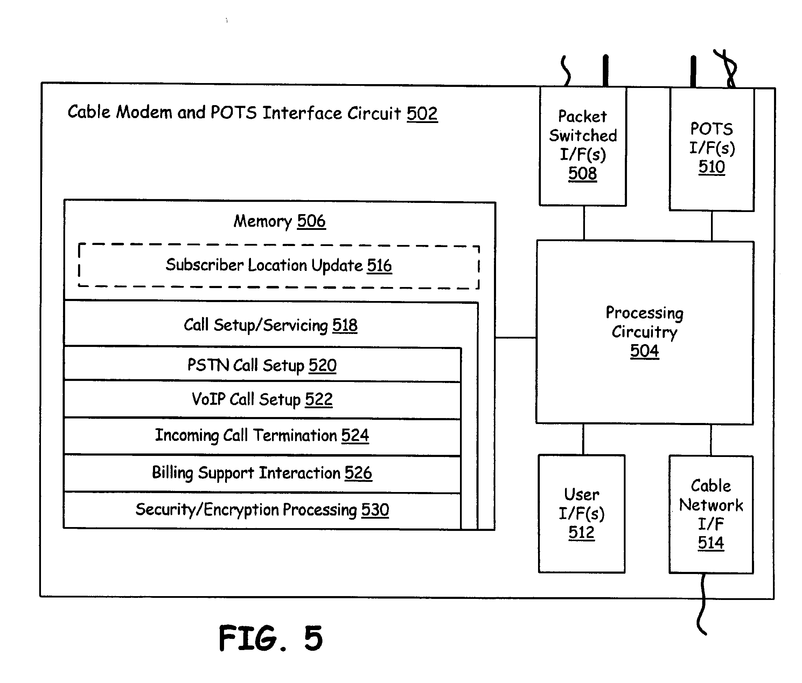

FIG. 5 is a block diagram illustrating a cable modem and POTS interface circuit constructed according to an embodiment of the present invention. As contrasted to the structure of FIG. 4, the structure of FIG. 5 includes both cable modem and POTS interface circuits. The cable modem of POTS interface circuit 502 includes memory 506, processing circuitry 504, packet switched interface(s) 508, POTS interface(s) 510, a cable network interface(s) 514, and a user interface(s) 512. The processing circuitry 504 may include a digital signal processor, a standard instruction set microprocessor, a reduced instruction set microprocessor, an application specific integrated circuit, a field programmable gate array, or another integrated circuit capable of executing software instructions and operating upon data. The memory 506 is one or more RAM, ROM, flash RAM, flash ROM, hard disk, optical media, or other storage capable of storing instructions and data.

The POTS interface 510 communicatively couples to one or more telephones via a wired or wireless link. For example, POTS interface 510 may communicatively couple to one or more telephones via twisted pair wiring or via a cordless phone interface. The packet switched interface 508 supports wired and/or wireless packet switched communications. For example, the packet switched interface 508 may support a wireless LAN communication interface standard such as 802.11a, b, g and/or n, a wireless personal area network (WPAN) operating standard such as Bluetooth, or a wired LAN interface, e.g., Ethernet. The cable network interface 514 communicatively couples the cable modem and POTS interface circuit 502 to the cable network 102. The cable network interface 514 supports communications according to the DOCSIS specification, for example. User interface(s) 512 support keyboard, mouse, monitor, speakers, and other user interface devices.

According to the present invention, the cable modem and POTS interface circuit 502 includes memory 506 that stores software instructions and data to support operations according to the present invention. These software instructions include subscriber location update instructions 516 that, upon execution by the processing circuitry 504, cause the cable modem and POTS interface circuit 502 to interface with a head end system 108 to provide subscriber location update information. For example, a user via the user interface 512 may manually enter instructions that all incoming telephone calls are to be forwarded to a VoIP terminal 148, for example. In response, the cable modem and POTS interface circuit 502 interacts with a head end system 108 to update subscriber tracking and/or address mapping information stored at the head end system 108. This information may be later used by head end system 108 to service incoming calls intended for a telephone supported by the cable modem and POTS interface circuit 502. As another example of an operation of the cable modem and POTS interface circuit 502, a user may establish rules based upon time, day of week, day of month, or month of the year for subscriber location update and tracking.

The memory 506 also stores call setup and servicing instructions 518 that, upon execution by the processing circuitry 504, cause the cable modem and POTS interface circuitry 502 to setup and service calls for telephones coupled via the POTS interface 510,. These instructions include PSTN call setup instructions 520, which, upon their execution by the processing circuitry 504, causes the cable modem and POTS interface circuit 502 to communicate with head end system 108 to initiate a PSTN call to PSTN terminal 134, for example. Likewise, upon execution of VoIP call setup instructions 522 by the processing circuitry 504, the POTS interface 510 and the cable network interface 514 initiate a call to VoIP terminal 148, for example. Incoming call termination instructions 524, upon executed by processing circuitry 504, cause the cable modem and POTS interface circuit 502 to terminate incoming calls received from the head end system 108 via the cable network 514 to a telephone coupled via the POTS interface 510. Further, a local VoIP telephone can be serviced by the packet switched interface 508. In such case, upon execution of incoming call termination instructions 524 by the processing circuitry 504, the cable modem and POTS interface circuitry 502 attempts delivery of an incoming call via the packet switched interface(s) 508.

Also stored in memory 506 are billing support interaction instructions 526. Upon execution of the billing support interaction instructions 526 by the processing circuitry 504, the cable modem and POTS interface circuit 502 interfaces with a servicing head end system 108 to perform billing operations. Further, security/encryption processing instructions 530 upon execution by processing circuitry 504 cause the cable modem and POTS interface circuit 502 to enable secure and/or encrypted communications via the POTS interface 510 and/or the packet switched interface 508 and the cable network 514. Such operations precludes snooping by another terminal and/or the head end system or systems that service the communication.
Still referring to FIG. 5, the packet switched interfaces 508 may include a wireless access point that supports wireless communications within a premises serviced by the cable modem and POTS interface circuitry.

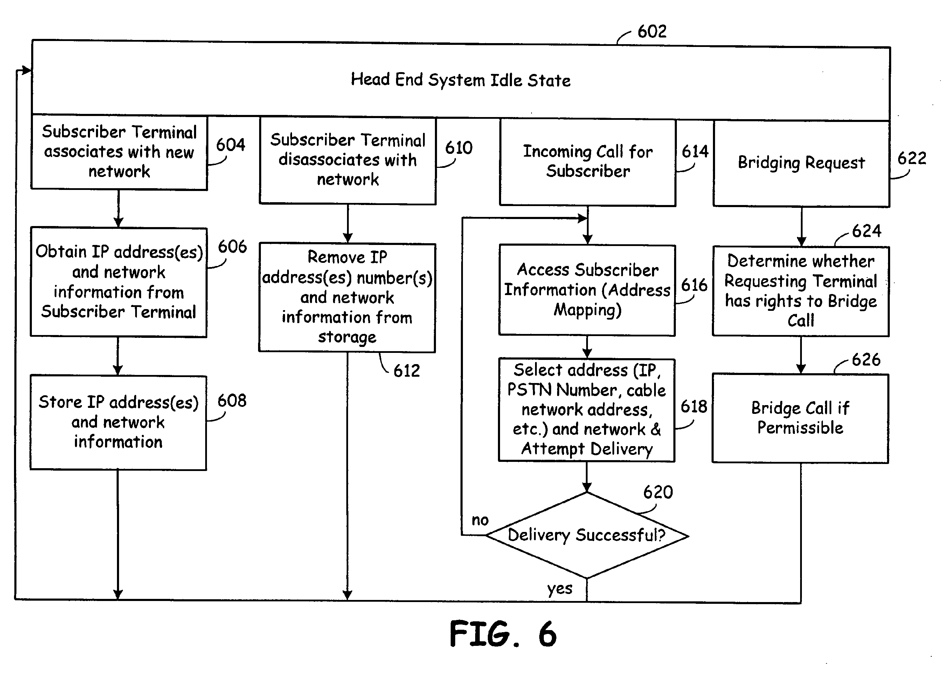

FIG. 6 is a flow chart illustrating operation of a head end system according to an embodiment of the present invention. Operation commences with the head end system in an idle state (Step 602). Various operations occur from the head end system idle state of step 602. The reader will appreciate the head end of the present invention perform many operations not described with reference to FIG. 6 and that the operations described with reference to FIG. 6 are performed according to the present invention.

A first operation according to the present invention occurs when a subscriber terminal that is tracked by the head end system associates with a new network (Step 604). Referring particular to FIG. 1, when VoIP terminal 146 is being tracked by the head end system and associates with access point 142, the operation at 604 commences. After operation 604 commences, the head end system obtains the IP address or addresses and network information from the subscriber terminal 146 (Step 606). Upon attachment of the VoIP terminal 146 to access point 142, the VoIP terminal 146 is provided with an IP address by access point 142. Thus, upon attachment, the VoIP terminal 146 reports its newly assigned IP address to the head end system at Step 606. The head end system then stores the IP address and network information received from VoIP terminal 146 (Step 608). From Step 608, operation returns to Step 602.

Likewise, when a VoIP terminal roams away from a previously servicing access point, e.g., 142, the subscriber terminal 146 disassociates with the network (Step 610). With this disassociation, the VoIP terminal 146 or a previously servicing access point 142 sends a message to a servicing head end system 108 that the VoIP terminal 146 has disassociated. In response, the head end system removes the IP address and network information from storage that was previously used for tracking (Step 612). Thus, with this update having occurred, the head end system 108 understands that it can no longer forward a communication or otherwise access the VoIP terminal 146 via the disassociated network. From Step 612, operation returns to Step 602.

From the idle state of Step 602, a head end system may receive an incoming call intended for a serviced subscriber (Step 614). The subscriber may be identified based upon an IP address, a subscriber handle, a PSTN number, or upon another identifier of the subscriber. In response to the incoming call, the head end system accesses the subscriber information (address mapping) for the subscriber (Step 616). In response to its access of the subscriber information, the head end system selects an address for delivery of the call. Such address may be an IP address, a PSTN number, a cable network address or another address associated currently with the subscriber. The head end system then attempts to deliver the call using that address (Step 618). In a first instance at Step 618, the head end system 108 may attempt delivery of the incoming call to telephone 126, for example. In the second instance, the head end system 108, based upon subscriber tracking address and mapping information, determines that the subscriber is currently associated with PSTN terminal 134 and attempts delivery at that location. As another example, based upon the address mapping and subscriber tracking information, the head end system determines that the subscriber is currently associated with VoIP terminal 148 and attempts delivery at VoIP terminal 148. If delivery is not successful (as determined at Step 620), the head end system attempts to access additional subscriber information for forwarding the call to a different location. If delivery is successful (as determined at Step 620), the call is serviced to completion and operation returns to the head end system idle state (Step 602). Upon a certain number of failures or an exhausted attempted delivery operation, the incoming call may be sent to voice mail or a busy signal may be provided to the caller.

In another operation according to the present invention, the head end system receives a request to bridge a call between the Internet and the PSTN. The bridging request may be from a subscriber to the system or from another head end system. As a first example, referring to FIG. 1, a subscriber using VoIP terminal 148 desires to access cell phone 138. The subscriber sends a bridging request via the VoIP terminal 148 to head end system 108 requesting bridging. The head end system 108 then determines whether the requesting VoIP terminal 148 (subscriber) has the right to bridge the call (Step 624). If bridging is permitted for the VoIP terminal 148 (subscriber), the head end system 108 sets up and bridges the call to cellular phone 138 (Step 626). If not, the call is terminated.

As another example of these bridging operations, head end system 226 receives a request from head end system 228 to bridge a call to PSTN terminal 238 via PSTN 206. Referring to FIG. 2 and FIG. 6, the requesting head end system 228 may have received a subscriber request from PSTN terminal 240 to terminate a call to PSTN terminal 238. However, to avoid significant toll charges, as may be experienced in an overseas call, the head end system 228 requests that the head end system 226 bridge calls to PSTN 206, which is local to PSTN terminal 238. With these bridging operation, significant PSTN toll charges are reduced because the call is primarily routing via the Internet 104.

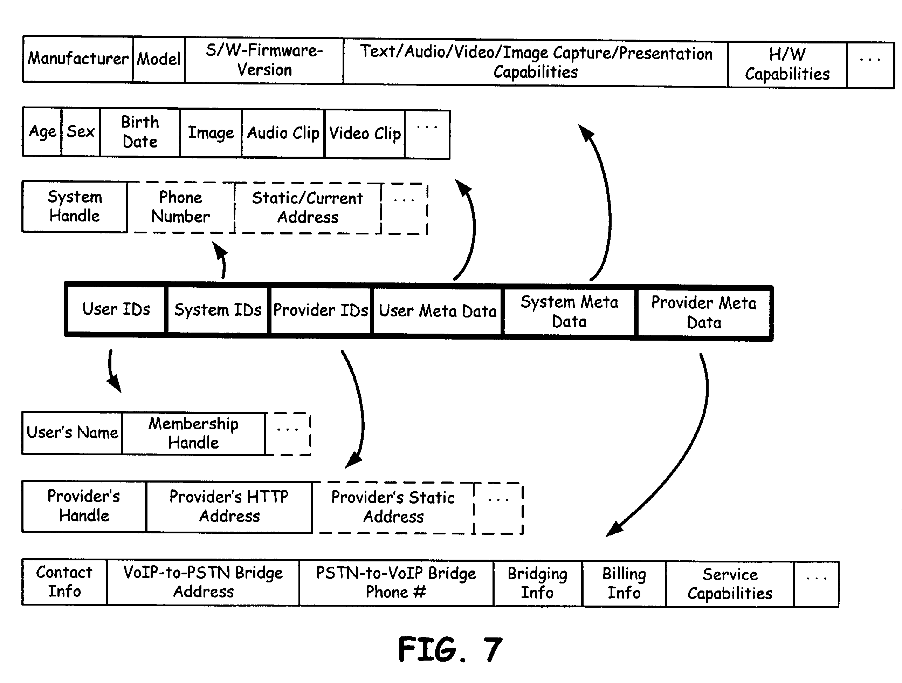

FIG. 7 is a block diagram illustrating subscriber tracking and identification information employed according to an embodiment of the present invention. FIG. 7 depicts various cross reference identifiers that may include one or more user identifiers, terminal identifiers and service provider identifiers. These user identifiers may be stored and managed by a head end system of the present invention. For example, user identifiers may include user name, member handle, or other like information. System identifiers may include a system handle, phone number, ESN, stacker card address, or other like information. A provider I.D. may include a provider handle, a network address, a static address, or other like information. In addition to the user system and provider identifiers, various meta data may be associated with these identifiers. For example, personal information such as the age, sex, birth date, image, audio clip, video clip, authorization information, or other like information may be associated with a user. The terminal identifier may contain information such as manufacturer, model number, software version, multi media capabilities, hardware capabilities, or other like information. The service provider Meta data may include contact information.

Subscriber identifiers may comprise a user's name or some "handle" that uniquely identifies a user with that service provider. A service provider identifier might comprise a web address, provider name, or the provider's static IP address. A terminal identifier might be a computer name, telephone number, or serial number, for example. User information might be nearly anything related or unrelated to the overlying service (age, sex, birthdate, etc.). Terminal information might include manufacturer, model number, firmware/software/hardware version, image/video/audio capabilities, processing power, memory/storage capability, battery capability and status, operational status, available CODECs and versions, etc. As with other metadata, the terminal information might be related or not to the overlying service. Service provider information might include zero or more of service descriptions, service characteristics/limitations, service status, billing info, etc. This meta data may be used in managing subscriber information according to the present invention.

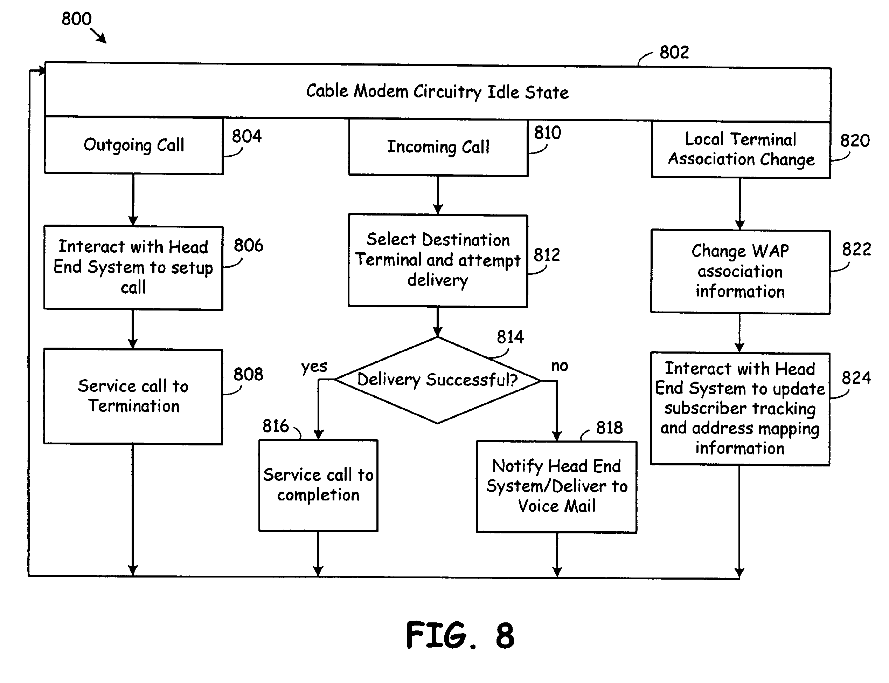

FIG. 8 is a flow chart illustrating cable modem circuit operations according to an embodiment of the present invention. The cable modem circuit resides in an idle state (Step 802) until operations according to the present invention are performed. A first operation according to the present invention is performed when the cable modem circuit receives an outgoing call request (Step 804). In such case, the cable modem circuit interacts with a servicing head end system to setup the call (Step 806). After successful interaction with the head end system, the cable modem circuit sets up and services the call to termination (Step 808). From Step 808, operation returns to Step 802.

In another operation according to the present invention, the cable modem circuit is requested to service an incoming call (Step 810). Based upon information received at the incoming call request, the cable modem circuit selects a destination terminal and attempt delivery (Step 812). As was previously described with reference to FIGs. 1, 2 and 5, the cable modem circuit may service a plurality of telephones and/or VoIP terminals. In such case, at Step 812, the cable modem circuit selects one of the terminals for call delivery. The selection may be based upon a PSTN number, IP address or subscriber handle associated with the incoming call. With the terminal selected, the cable modem circuit attempts delivery at Step 812. If delivery is successful (as determined at Step 814), the call is serviced to completion (Step 816). However, if delivery is not successful (Step 814) the cable modem circuit notifies the head end system that the termination call was unsuccessful. Alternatively, the cable modem circuit may deliver the call to local voice mail (both at Step 818). When the cable modem circuit notifies the head end that the delivery is unsuccessful, the head end may deny service of the call or deliver the call to a different destination terminal.

The cable modem circuitry may also detect a local terminal association change (Step 820). This association change may occur when a mobile terminal wirelessly detaches from a WAP of the cable modem circuitry. Further, this operation may occur when a new wireless terminal roams into the coverage area of the WAP of cable modem circuitry. In either case, the WAP of the cable modem circuitry changes its WAP association information based upon this local terminal association change (Step 822). Then, the cable modem circuitry interacts with the head end system to update subscriber tracking and address mapping information for the subscriber associated with the wireless terminal (Step 824).

As one of average skill in the art will appreciate, the term "communicatively coupled," as may be used herein, includes wireless and wired, direct coupling and indirect coupling via another component, element, circuit, or module. As one of average skill in the art will also appreciate, inferred coupling (i.e., where one element is coupled to another element by inference) includes wireless and wired, direct and indirect coupling between two elements in the same manner as "communicatively coupled".

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims.

## Claims

1. A communication infrastructure comprising:
a public switched telephony network;
an Internet network;
a cable network;
a head end system communicatively coupled to the public switched telephony network, to the cable network, and to the Internet network;
the head end system operable to bridge calls between the public switched telephony network and the Internet network; and
a telephone device of a subscriber having a telephone number associated with both the head end system and the public switched telephony network, wherein the telephone device interacts with a billing server of the head end system to obtain authorization for head end system bridging between the Internet network and the public switched telephony network for the telephony device.

2. The communication infrastructure of claim 1, wherein the head end system is further operable to bridge calls between the cable network and the Internet network and to bridge calls between the public switched telephone network and the cable network.

3. The communication infrastructure of claim 1, wherein the billing server of the cable head end is further operable to monitor bridging use of the head end system by the telephone device.

4. A communication infrastructure comprising:
a public switched telephony network;
an Internet network;
a cable network;
a head end system communicatively coupled to the public switched telephony network, to the cable network and to the Internet network; and
the head end system operable to bridge calls between the public switched telephony network and the Internet network, between the cable network and the Internet network, and between the cable network and the public switched telephony network.

5. The communication infrastructure of claim 4, further comprising a plurality of cable modem circuits, each servicing at least one subscriber and including:
a cable network interface;
at least one POTS interface; and
bridging circuitry operable to bridge a call between a VoIP format and a POTS format.

6. The communication infrastructure of claim 5, wherein each of the plurality of cable modem circuits has associated therewith at least one public switched telephony network number and at least one IP address.

7. A communication infrastructure that extends into a home, the communication infrastructure comprising:
a public switched telephony network;
an Internet network;
a head end system communicatively coupled to both the public switched telephony network and to the Internet network;
a cable network communicatively coupled to the head end system and that extends into the home;
a first wireless access point communicatively coupled to the Internet network outside of the home;
a second wireless access point communicatively coupled to the cable network within the home;
a mobile terminal having a wireless transceiver that communicatively couples with the first wireless access point when the mobile terminal is outside the home, and communicatively couples with the second wireless access point when the mobile terminal is inside the home;
the mobile terminal having a telephone number associated with the public switched telephony network; and
the head end system supporting address mapping that enables communication to the mobile terminal using the telephone number via both of the first wireless access point and the second wireless access point.

8. A method for operating a communication infrastructure that includes a cable network, a head end system that communicatively couples to the cable network, to the Internet, and to the public switched telephone network, and a plurality of cable modem circuits that communicatively couple to the cable network, the method comprising:
the head end system receiving a call bridging request from a telephone device of a subscriber having a telephone number associated with both the head end system and the public switched telephony network;
the head end system interacting with the telephone device to verify authorization of the telephone device to bridge a call between the Internet network and the public switched telephony network network; and
the head end system bridging a call between the Internet network and the public switched telephony network for the telephone device.

9. A method for operating a communication infrastructure that includes a cable network, a head end system that communicatively couples to the cable network, to the Internet, and to the public switched telephone network, and a plurality of cable modem circuits that communicatively couple to the cable network, the method comprising:
the head end system bridging a first call between the public switched telephony network and the Internet network;
the head end system bridging a second call between the cable network and the Internet network; and
the head end system bridging a third call between the cable network and the public switched telephony network.

10. A method for operating a communication infrastructure that includes a cable network, a head end system that communicatively couples to the cable network, to the Internet, and to the public switched telephone network, a first wireless access point communicatively coupled to the Internet network outside of a home, and a second wireless access point communicatively coupled to the cable network within the home, the method comprising:
the head end system delivering a call to a mobile terminal via the first wireless access point when the mobile terminal is outside the home;
the head end system delivering the call to the second wireless access point when the mobile terminal is inside the home; and
the head end system supporting address mapping that enables communication to the mobile terminal using as single telephone number via both of the first wireless access point and the second wireless access point.
